# FASCICULE DE BREVET EUROPEEN

(11) **EP 1 011 339 B1**
(45) Date de publication et mention de la délivrance du brevet: **24.03.2004**
(21) Numéro de dépôt: 98902031.8
(22) Date de dépôt: 06.01.1998
(51) Int. Cl.: A22C 17/00

(54) **PROCEDE DE PREPARATION D'UN MORCEAU DE VIANDE, ELEMENT DE PREHENSION POUR UN MORCEAU DE VIANDE ET MORCEAU DE VIANDE**
VERFAHREN ZUR HERSTELLUNG EINES FLEISCHSTÜCKES, GREIFELEMENT FÜR EIN STÜCK FLEISCH UND FLEISCHSTÜCK
METHOD FOR PREPARING A PIECE OF MEAT, ELEMENT FOR GRASPING A PIECE OF MEAT AND PIECE OF MEAT

(30) Priorité: 08.01.1997 FR 9615787
(43) Date de publication de la demande: 28.06.2000
(73) Titulaire: Brisson, Michel, 45120 Cepoy (FR)
(72) Inventeur: Brisson, Michel, 45120 Cepoy (FR)
(74) Mandataire: Michelet, Alain
(86) Numéro de dépôt international: PCT/FR1998/000014
(87) Numéro de publication internationale: WO 1998/030107

(56) Documents cités:
- FR-A- 2 728 435
- US-A- 2 419 424
- US-A- 2 553 113

## Description

L'invention concerne un procédé de préparation d'un morceau de viande enfermant un os, un élément de préhension pour un morceau de viande enfermant un os et un morceau de viande enfermant un os.

La préparation de morceaux de viande enfermant un os et qui sont destinés à être découpés en tranches tels que par exemple des jambons et des gigots, implique un choix lors de leur préparation dû à la position centrale de l'os. En effet, pour assurer un goût traditionnel et également pour la présentation du morceau de viande entier, il est préférable que l'os reste à sa place pendant la préparation du morceau de viande. Au contraire, pour la découpe du morceau de viande en tranches, notamment en tranches fines lorsqu'il s'agit d'un jambon, il est préférable que l'os soit extrait pour faciliter la découpe en tranches et pour réduire la quantité de chutes de viande.

Le but de l'invention est d'éviter ce choix.
Le document FR-A-2.728.435 divulgue un procédé de fabrication d'un jambon cuit avec os destiné à être tranché, et un dispositif d'attache pour la mise en oeuvre de ce procédé. Selon ce procédé, on désosse le jambon, on prépare le jambon désossé pour la cuisson, on replace l'os cru dans le jambon préparé, on cuit le jambon avec l'os et on enlève l'os du jambon cuit avant tranchage. Avant de replacer l'os dans le jambon préparé, on coupe une extrémité de l'os et on introduit l'os coupé par son extrémité coupée de manière que des moyens de préhension soient au voisinage de l'extrémité non coupée de l'os. Grâce au dispositif d'attache, on retire l'os avant tranchage du jambon cuit en exerçant une force d'extraction sur le dispositif d'attache.

Le but de l'invention est atteint par un procédé de préparation d'un morceau de viande enfermant un os et destiné à être découpé en tranches, qui comprend des étapes consistant à séparer la viande de l'os, retirer l'os du morceau de viande crue, préparer l'os et réinsérer l'os dans le morceau de viande crue.

Selon l'invention, l'étape de préparer l'os comprend l'étape de tailler l'os de façon à éviter une ouverture de la partie intérieure de l'os comprenant la moelle de l'os.

Le procédé de l'invention permet ainsi de satisfaire les deux exigences a priori contradictoires de préparer le morceau de viande avec l'os et de le découper sans l'os et de présenter le morceau de viande à la vente dans le même état entier que les morceaux de viande correspondants actuellement mis en vente. A cette fin, ce procédé tient compte du fait qu'il est plus facile d'enlever l'os de la viande crue que de la viande cuite ou fumée ou autrement préparée.

Ainsi, conformément à l'invention, le morceau de viande crue sur l'os est découpé de manière telle que l'on puisse retirer au moins partiellement l'os. Une fois l'os enlevé, la préparation du morceau de viande est commencée en fonction de la nature de la viande et de l'état dans lequel le morceau doit être vendu. Pendant ce temps, l'os est taillé de façon que la partie élargie soit réduite à une section correspondant sensiblement à celle de la partie la plus mince de l'os. A cette fin, l'extrémité de l'os est découpée en réduisant la matière osseuse de l'extrémité de l'os destinée à être relogée à l'intérieur du morceau de viande par découpe ou sciage aux dimensions requises. N'ouvrant pas la partie intérieure de l'os, on évite un contact de la moelle de l'os avec la viande.

Une fois le morceau de viande préparé et l'os taillé, l'os est remis dans le morceau de viande avec la partie taillée à l'intérieur du morceau de viande qui, ainsi reconstitué dans son état initial, continue à être préparé en fonction du type de viande et de préparation souhaitée, notamment cuit, salé ou fumé ou laissé cru.

Le procédé de l'invention peut s'appliquer par exemple à un jambon de porc. Dans ce cas, le jambon est d'abord désossé, paré, salé et éventuellement malaxé. Pendant ce temps, l'os du fémur est préparé, et il est réintroduit dans le jambon pendant le moulage. Ensuite, le jambon est cuit. Après refroidissement, le jambon est emballé sous vide pour assurer une meilleure conservation avant sa découpe.

A la place de la cuisson, il peut y avoir une étape de fumage ou tout autre procédé de conservation. Il peut y avoir aussi immédiatement emballage en vue de la conservation et du transport vers un point de vente.

En variante du procédé décrit jusqu'ici, l'ensemble des trois os du jambon, à savoir le fémur, le tibia et le péroné, peuvent être enlevés et taillés. Une fois taillés, les os sont réinsérés dans le jambon de façon que les extrémités taillées des os se retrouvent à l'intérieur du jambon.

Cette disposition permet, appliquée à tout morceau de viande enfermant un os et indépendamment de la nature du morceau de viande, de saisir, le moment voulu, l'os par l'extrémité laissée légèrement en dehors du morceau de viande ou assez proche en dessous de la surface du morceau de viande et de sortir l'os sans incidence sur l'état du morceau de viande.

Selon une autre variante du procédé de l'invention, l'os peut être pourvu d'un moyen de préhension qui, notamment lorsque l'os est entièrement rentré dans le morceau de viande, facilite sa préhension et l'enlèvement. Ce principe peut être appliqué indépendamment de la quantité d'os à enlever avant la découpe du morceau de viande. Chaque os destiné à être retiré avant la découpe du morceau de viande est alors pourvu d'un tel moyen de préhension.

L'invention concerne également un élément de préhension pour un morceau de viande enfermant un os, le morceau de viande étant destiné à être préparé selon un procédé comprenant les étapes de séparer la viande crue de l'os, retirer l'os du morceau de viande crue, préparer l'os, ce qui comprend tailler l'os, et réinsérer l'os dans le morceau de viande crue. Selon l'invention, l'élément de préhension consiste en un élément ayant sensiblement la forme d'une feuille formée de façon à présenter au moins un trou destiné à recevoir l'os et ayant une longueur suffisante pour permettre de la saisir pour l'enlèvement de l'os du morceau de viande avant de le découper en tranches.

Selon un mode de réalisation avantageux de l'invention, l'élément de préhension est une feuille en matière synthétique alimentaire. Cette feuille présente un trou central destiné à recevoir l'os et deux trous latéraux disposés de part et d'autre du trou central qui sont destinés à servir à un engagement d'au moins un doigt d'une main pour l'enlèvement de l'os du morceau de viande avant de le découper en tranches.

L'élément de préhension est intégré dans un emballage du morceau de viande. Dans ce cas, l'élément en forme de feuille est constitué par une partie par exemple sensiblement rectangulaire, prédécoupée de l'emballage et pourvue d'au moins un trou constituant le trou central destiné à recevoir l'os.

L'invention concerne aussi un morceau de viande enfermant un os et destiné à être découpé en tranches. Conformément à l'invention, l'os est détaché de la viande et taillé et disposé sensiblement à sa place initiale de façon à pouvoir être enlevé du morceau de viande avant que ce denier ne soit découpé en tranches.

D'autres avantages et caractéristiques de l'invention ressortiront de la description d'un exemple de réalisation en référence aux dessins. Dans ces dessins,

La Figure 1 montre une découpe schématique d'un jambon.

La Figure 2 une découpe schématique d'un jambon ouvert avec une partie du fémur avant moulage, et

La Figure 3 montre un élément de préhension selon l'invention.

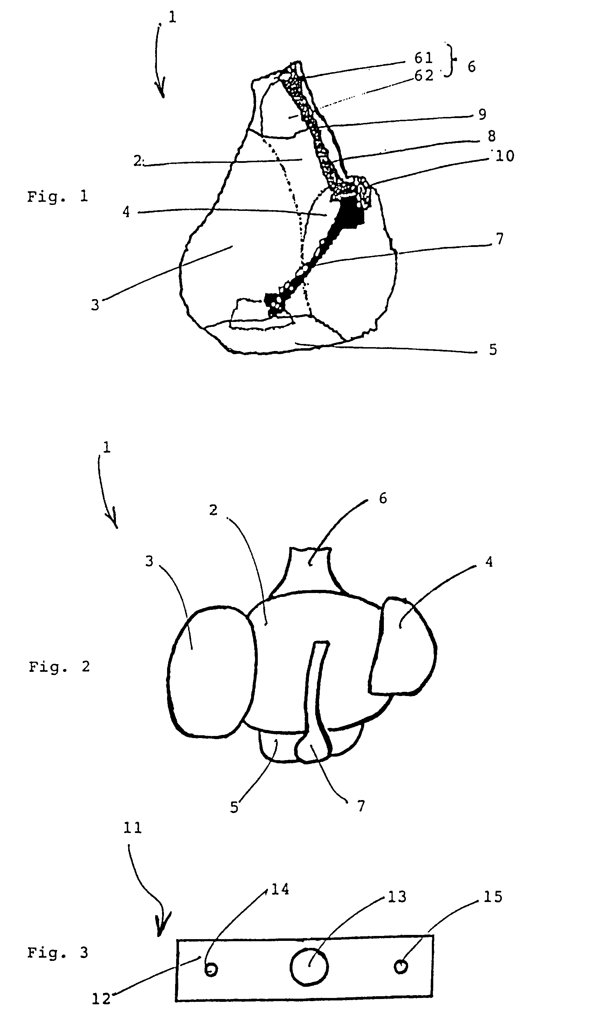

Pour la préparation d'un jambon cuit, un jambon 1 est découpé sèlon le schéma représenté sur la Figure 1, à savoir en une sous-noix 2, une grosse noix 3, une noix pâtissière 4, de la viande de quasi 5, un jarret 6, avec un petit jarret 61 et un gros jarret 62. Par cela, on libère un fémur 7, un tibia 8, un péroné 9, et une rotule 10. Ensuite, le jambon est désossé, paré et malaxé. Les os sont taillés à l'extrémité destinée à être réinsérée dans le jambon en réduisant ses dimensions de façon que les os ainsi taillés ne présentent plus, en direction de l'extrémité taillée de l'os, d'élargissement, pourvus d'un élément de préhension et réinsérés dans le jambon.

Après un saumurage du jambon cru dans une saumure ayant une concentration de l'ordre de 12%, le jambon est reconstitué et moulé. Le moulage peut s'effectuer sous vide, en moule, au torchon ou en filet. Ensuite, le jambon est cuit à l'eau. En variante, la cuisson peut être effectuée au bouillon, à la vapeur ou au four. Après refroidissement, le jambon est emballé sous vide pour améliorer sa conservation.

Avant le tranchage, l'os est retiré du jambon au moyen d'un élément de préhension 11 représenté sur la Figure 3. L'élément de préhension 11 est une feuille en matière synthétique alimentaire 12. Cette feuille 12 présente un trou central 13 destiné à recevoir l'os et deux trous latéraux 14, 15 espacés de part et d'autre du trou central et destiné à servir à un engagement d'un doigt d'une main pour l'enlèvement de l'os.

Les signes de référence insérés après les caractéristiques techniques mentionnées dans les revendications, ont pour seul but de faciliter la compréhension de ces dernières, et n'en limitent aucunement la portée.

## Revendications

1. Procédé de préparation d'un morceau de viande enfermant un os et destiné à être découpé en tranches, comprenant des étapes consistant à séparer la viande de l'os, à retirer l'os du morceau de viande crue, à préparer l'os et à réinsérer l'os dans le morceau de viande crue, **caractérisé en ce que** l'étape de préparer l'os comprend l'étape de tailler l'os de façon que la partie élargie soit réduite à une section correspondant sensiblement à celle de la partie la plus mince de l'os.

2. Procédé selon la revendication 1, **caractérisé en ce que** le morceau de viande est un jambon.

3. Procédé selon la revendication 1 ou 2, **caractérisé en ce qu'**il comprend en outre l'étape de cuire le morceau de viande.

4. Procédé selon l'une des revendications 1 à 3, **caractérisé en ce que** l'étape de tailler l'os comprend un enlèvement au moins partiel de matière osseuse, à une extrémité de l'os destinée à être relogée à l'intérieur du morceau de viande.

5. Procédé selon l'une des revendications 1 à 4, **caractérisé en ce que** l'os taillé est muni, avant d'être réinséré dans le morceau de viande crue, d'au moins un élément de préhension destiné à faciliter l'enlèvement de l'os du morceau de viande.

6. Procédé selon l'une des revendications 1 à 5, **caractérisé en ce que** le morceau de viande crue, une fois l'os retiré, est malaxé.

7. Procédé selon l'une des revendications 1 à 6, **caractérisé en ce que** le morceau de viande crue, une fois l'os réinséré, est saumuré.

8. Elément de préhension pour un morceau de viande enfermant un os et destiné à être découpé en tranches, le morceau de viande étant destiné à être préparé selon un procédé comprenant les étapes consistant à séparer l'os de la viande crue, retirer l'os du morceau de viande crue, tailler l'os, réinsérer l'os dans le morceau de viande crue, l'élément de préhension consistant en un élément ayant sensiblement la forme d'une feuille formée de façon à présenter au moins un trou destiné à recevoir l'os et ayant une longueur suffisante pour permettre de saisir la feuille pour enlever l'os du morceau de viande avant de le découper en tranches, **caractérisé en ce que** l'élément en forme de feuille est constitué par une partie prédécoupée d'un emballage du morceau de viande.

9. Elément de préhension selon la revendication 8, **caractérisé en ce qu'**il est en matière synthétique alimentaire.

10. Elément de préhension selon la revendication 8 ou 9, **caractérisé, en ce qu'**il est pourvu de deux trous espacés de part et d'autre du trou destiné à recevoir l'os, ces trous latéraux étant destinés à servir à un engagement d'au moins un doigt d'une main pour l'enlèvement de l'os du morceau de viande.

11. Morceau de viande destiné à être découpé en tranches, et enfermant un os détaché de la viande, mais disposé sensiblement à sa place initiale de façon à pouvoir être enlevé du morceau de viande avant que ce dernier ne soit découpé en tranches, **caractérisé en ce que** l'os est taillé de façon que la partie élargie soit réduite à une section correspondant sensiblement à celle de la partie la plus mince de l'os.

## Claims

1. A method for preparing a piece of meat containing a bone and intended to be sliced up, including steps consisting in separating the meat from the bone, in removing the bone from the piece of raw meat, in preparing the bone and in reinserting the bone into the piece of raw meat, **characterised in that** the bone preparing step comprises the bone dressing step so that the widened section is reduced to a section corresponding substantially to that of the thinnest section of the bone.

2. A method according to claim 1, **characterised in that** the piece of meat is ham.

3. A method according to claim 1 or 2, **characterised in that** it includes moreover the step of cooking the piece of meat.

4. A method according to one of the claims 1 to 3, **characterised in that** the bone dressing step involves removing at least partially bone matter, at one end of the bone, for relocation inside the piece of meat.

5. A method according to one of the claims 1 to 4, **characterised in that** the dressed bone, before reinsertion into the piece of raw meat, is fitted with at least one grasping element intended to facilitate the removing the bone from the piece of meat.

6. A method according to one of the claims 1 to 5, **characterised in that** the piece of raw meat, after removing the bone, is kneaded.

7. A method according to one of the claims 1 to 6, **characterised in that** the piece of raw meat, after removing the bone, is put in brine.

8. A grasping element for a piece of meat including a bone and intended to be cut into slices, the piece of meat being intended to be prepared according to a method including the steps consisting in separating the bone from the raw meat, removing the bone from the piece of raw meat, dressing the bone, reinserting the bone into the piece of raw meat, the grasping element consisting of an element having substantially the shape of a sheet formed in order to achieve at least one hole intended for receiving the bone and having sufficient length to enable to grasp the sheet to remove the bone from the piece of meat in order to cut it into slices, **characterised in that** the sheet-shaped element consists of a pre-cut shape of a wrapping of the piece of meat.

9. A grasping method according to claim 8, **characterised in that** it is made of synthetic foodstuff.

10. A grasping element according to claim 8 or 9, **characterised in that** it is provided with two holes spaced on either side of the hole intended for receiving the bone, these lateral holes being intended to be used for engaging at least one finger of a hand for removing the bone from the piece of meat.

11. A piece of meat intended to be cut into slices and including a bone detached from the meat, but arranged substantially at its initial location in order to be removable from the piece of meat before said piece is sliced up, **characterised in that** the bone is dressed so that the widened portion is reduced to a section corresponding substantially to that of the thinnest portion of the bone.

## Patentansprüche

1. Verfahren zur Herstellung eines Fleischstücks, das einen Knochen einschließt und dazu bestimmt ist, in Scheiben geschnitten zu werden, wobei das Verfahren Schritte umfasst, die darin bestehen, das Fleisch vom Knochen zu trennen, den Knochen vom Stück Rohfleisch zu entfernen, den Knochen vorzubereiten und den Knochen in das Stück Rohfleisch wieder einzufügen, **dadurch gekennzeichnet, dass** der Schritt zum Vorbereiten des Knochens den Schritt umfasst, gemäß dem der Knochen so geschnitten wird, dass der verbreiterte Abschnitt auf einen Abschnitt verringert wird, der im Wesentlichen dem Abschnitt des schmalsten Abschnitts des Knochens entspricht.

2. Verfahren nach Anspruch 1, **dadurch gekennzeichnet, dass** das Stück Fleisch ein Schinken ist.

3. Verfahren nach Anspruch 1 oder 2, **dadurch gekennzeichnet, dass** das Verfahren ferner den Schritt umfasst, das Stück Fleisch zu kochen.

4. Verfahren nach einem der Ansprüche 1 bis 3, **dadurch gekennzeichnet, dass** der Schritt des Schneidens des Knochens ein zumindest teilweises Entfernen der Knochenmasse an einem Ende des Knochens umfasst, das dazu bestimmt ist, wieder in das Innere des Fleischstücks eingesetzt zu werden.

5. Verfahren nach einem der Ansprüche 1 bis 4, **dadurch gekennzeichnet, dass** der geschnittene Knochen, bevor er wieder in das Stück Rohfleisch eingesetzt wird, mit mindestens einem Greifelement versehen wird, das dazu bestimmt ist, das Entfernen des Knochens aus dem Fleischstück zu erleichtern.

6. Verfahren nach einem der Ansprüche 1 bis 5, **dadurch gekennzeichnet, dass** das Stück Rohfleisch, sobald der Knochen entfernt ist, geknetet wird.

7. Verfahren nach einem der Ansprüche 1 bis 6, **dadurch gekennzeichnet, dass** das Stück Rohfleisch, sobald der Knochen wieder eingefügt ist, gepökelt wird.

8. Greifelement für ein Fleischstück, das einen Knochen einschließt und dazu bestimmt ist, in Scheiben geschnitten zu werden, wobei das Fleischstück dazu bestimmt ist, gemäß eines Verfahrens vorbereitet zu werden, das Schritte umfasst, die darin bestehen, den Knochen vom Rohfleisch zu trennen, den Knochen aus dem Stück Rohfleisch zu entfernen, den Knochen zu schneiden, den Knochen in das Stück Rohfleisch wieder einzusetzen, wobei das Greifelement aus einem Element besteht, das im Wesentlichen die Form eines Blattes aufweist, das so ausgebildet ist, dass es mindestens ein Loch, das dazu bestimmt ist, den Knochen aufzunehmen, und eine Länge aufweist, die ausreicht, um ein Ergreifen des Blattes zu ermöglichen, um den Knochen aus dem Fleischstück zu entfernen, bevor dieses in Scheiben geschnitten wird, **dadurch gekennzeichnet, dass** das blattförmige Element aus einem vorgeschnittenen Abschnitt einer Verpackung des Fleischstücks gebildet ist.

9. Greifelement nach Anspruch 8, **dadurch gekennzeichnet, dass** es aus synthetischem Lebensmittelmaterial besteht.

10. Greifelement nach Anspruch 8 oder 9, **dadurch gekennzeichnet, dass** das Element mit zwei Löchern versehen ist, die zu beiden Seiten des Loches, das zur Aufnahme des Knochens bestimmt ist, angeordnet sind, wobei diese seitlichen Löcher zum Eingreifen mindestens eines Fingers einer Hand bestimmt sind, um den Knochen aus dem Fleischstück zu entfernen.

11. Fleischstück, das dazu bestimmt ist, in Scheiben geschnitten zu werden, und das einen Knochen einschließt, der vom Fleisch getrennt ist, aber im Wesentlichen in seiner Ursprungsposition so angeordnet ist, dass er aus dem Fleischstück entfernt werden kann, bevor dieses in Scheiben geschnitten wird, **dadurch gekennzeichnet, dass** der Knochen so geschnitten ist, dass der verbreiterte Abschnitt auf einen Abschnitt verringert wird, der im Wesentlichen dem Abschnitt des schmalsten Abschnitts des Knochens entspricht.
